# EUROPEAN PATENT APPLICATION

(11) **EP 4 335 910 A2**
(43) Date of publication of application: **13.03.2024**
(21) Application number: 22879702.3
(22) Date of filing: 06.05.2022
(51) Int. Cl.: C09D 175/08, C09D 175/14, C08L 75/08, C08L 75/14, C08K 5/01, C08G 18/12, C08G 18/48, B82Y 30/00

(54) **PROTECTIVE COATING AGENT BASED ON A POLYETHER URETHANE PREPOLYMER**

(30) Priority: 08.05.2021 EA 202100238
(71) Applicant: Javadov, Nariman Farman, Baku, 1149 (AZ); Pashayev, Arif Mir Jalal, Baku, 1000 (AZ); Samedov, Adalat Soltan, Baku, 1119 (AZ); Abdullayev, Khagani Imran, Baku, 1132 (AZ); Mamedov, Ilgar Khasay, Baku, 1001 (AZ); Mamedova, Sevda Khurshud, Baku, AZ1000 (AZ)
(72) Inventor: Javadov, Nariman Farman, Baku, 1149 (AZ); Pashayev, Arif Mir Jalal, Baku, 1000 (AZ); Samedov, Adalat Soltan, Baku, 1119 (AZ); Abdullayev, Khagani Imran, Baku, 1132 (AZ); Mamedov, Ilgar Khasay, Baku, 1001 (AZ); Mamedova, Sevda Khurshud, Baku, AZ1000 (AZ)
(74) Representative: Jeck, Jonathan
(86) International application number: PCT/AZ2022/000009
(87) International publication number: WO 2023/060324

(57) **Abstract**

The invention relates to protective agents based on formopolymer-based coatings. These means are intended for protection of metal, concrete, wooden, glass surfaces. These means are intended for protection against various atmospheric and aggressive media, corrosion, static electricity, abrasion. These products can be used as a protective interior and exterior coating.

The polyetherurethane formpolymer based protective coating agent contains a polyetherpolyol, polyisocyanate simple polyetherpolyol. The polyetherpolyol with the content of complex-prosthetic polyether of molecular weight M=1002. Combined with styrene at a ratio of polyisocyanate containing polyether polyester of molecular weight M=1002 to styrene of ~1:2. Additionally contains nanocarbon, hardener MDI-24 and solvent-toluene. It contains at the following ratio of ingredients, wt. %: Polyetherurethane formpolymer - 70-80 Nanocarbon -0,1-0,3 Hardener MDI-24 - 10-12 Toluene - the rest.

## Description

The invention relates to protective means on the basis of formpolymers, which are intended for protection of metal, concrete, wooden, glass surfaces from various atmospheric and aggressive media, corrosion, static electricity, abrasive wear and can be used as a protective internal and external coating of pipelines, engineering aerospace and hydromechanical structures and facilities, power plants, port facilities, roofing iron, and also as a decorative coating.

Known composition for coatings containing polyoxypropylene triol, polyisocyanate on the basis of 4,4'-diphenylmethane diisocyanate and ethyl acetate at the following ratio of components in wt. % :
- Polyoxypropylene triol with molecular weight. 3000-5000 - 100
- Polyisocyanate based on 4,4'-diphenylmethane diisocyanate - 100-200
- Ethyl acetate - 100-200 (Patent RU 2073053 published in 1997).

The disadvantages of this composition are long curing time and insufficient strength properties of coatings.

A polyurethane composition for coatings is known, including bifunctional oligooxypro-pylene glycol, trimethylolpropane, inorganic pigments, inert solvents and polyisocyanate adduct in the form of a 70% solution in ethyl acetate of a prepolymer based on toluylene diisocyanate 65/35, glycerol and diethylene glycol (Copyright 1818332 USSR, published in 1993, BI 20).

The disadvantage of the composition is insufficiently high atmospheric and water resistance.

Known polyurethane composition for cold-drying coatings, including polyoxypropylene triol of molecular weight (MM) 3000-5000, polyisocyanate based on 4,4'-diphenylmethane diisocyanate, ethyl acetate, cured by atmospheric air moisture (patent RF 2073053, publ. 10.02.1997, BI 4).

However, this composition has insufficiently high strength and adhesion properties and can be applied at temperatures not lower than -5°C.

The closest to the claimed is a composition based on polyetherurethane formpolymer for protective coating (AZ120190042), consisting of simple polyetherpolyol, polyisocyanate with the content of complex polyether of molecular weight M=1002, taken in combination with styrene at the ratio of polyisocyanate with the content of complex polyether of molecular weight M=1002 to styrene -1: 2 at heating 70-80°C with the subsequent addition of Desmodur-L75 polyisocyanate dissolved in toluene at the ratio of toluene to Desmodur-L75 polyisocyanate - 25-75; the reaction is carried out for 8 hours, and as a hardener is introduced Desmodur-44V20L polyisocyanate; the ingredients used in the composition allow in combination to minimize toxic odor and to bring to full transparency of the coating, working in a wide temperature range, as well as to make the coating work in a wide range of temperatures with the following ratio of components:
- Desmodur-L75 brand polyisocyanate with toluene - 5-10
- Desmodur-44V20L polyisocyanate - 10-15
- simple polyetherpolyol and styrene - the rest. The disadvantage of the known composition is that at high temperature the surface coating is degraded.

The task of the invention is to create coatings working in an aggressive environment at minus temperatures above minus 70°C.

The set task is solved by the fact that the means for protective coatings on the basis of polyetherurethane formpolymer containing simple polyetherpolyol, polyisocyanate with the content of complex-polyester of molecular weight M=1002, in combination with styrene at the ratio of polyisocyanate with the content of complex-polyester of molecular weight M=1002 to styrene ~1:2, where according to the invention, additionally contains nanocarbon, hardener MDI-24 and solvent-toluene at the following ratio of ingredients, wt.%:
- Polyetherurethane prepolymer - 70-80
- Nanocarbon - 0,1 -0,3
- Hardener MDI-24 -10-14
- Toluene - the rest.

The essence of the proposed invention is that the introduction of a new hydroxide containing fatty aromatic, complex-prosthetic polyester with high reactivity in which it easily interacts at low temperature (up to -100°C) with isocyanate containing component in combination with a nanoadduct - nanocarbons of a wide spectrum forms a polyetherurethane nanocarbon containing erosion resistant composite material as polyetherurethane.

The proposed polyetheretherdiol in its molecule in addition to hydroxyl groups, which create urethane bond, in turn has unsaturated fragments of cyclohexene, due to which polyetheretherdiol has polymerization ability, as a result of which the final material is additionally cross-linked.

In addition, the ingredient in the form of low molecular weight nanocarbon disperses very well in the proposed polyester and forms a homogeneous system, and when diluted with aromatic hydrocarbon -toluene almost does not stratify, i.e. it dissolves well in toluene.

When using a set of ingredients below the claimed limit, the resulting coating has low physical and mechanical properties, and above the claimed limit is inexpedient, as it leads to a significant overconsumption of expensive ingredients.

Hardener MDI-24 - polymeric diphenylmethane diisocyanate.

The medium for protective coating is prepared as follows. The process is first carried out in a metal (stainless steel) reactor, with a volume of 20 liters, equipped with a mechanical stirrer with a paddle and electric heating. In the reactor placed 10 kg of the proposed polyetherdiol, to it add a calculated amount of nanocarbon. Then turn on the electric heating and the reactor is heated to 80 ° C, then turn on the stirrer and stir the mixture at a speed of 400-450 rpm for 1-2 hours. The obtained mixture is stirred in ULTRA - TURRAX disperser (mark: T65 digital) with a diamond tip at a speed of 9000-9500 rpm for 7-8 minutes, as a result of which nanocarbon disperses with polyetherdiol. This produces a homogeneous agent at the molecular (atomic) level. Then from the ready mixture an experimental amount of material is taken, a certain amount of toluene is added to it, after that a hardener in the amount of 20 mass parts of the total amount of the solution is added to the obtained remedy, mixed for 8-10 min and applied on the test object (substrate), whereby nanocarbon - fuller-enes are used to cover the glass surface, and nanotubes are used to cover the metal surface. After curing, chemical and physical-mechanical parameters of the obtained coating are determined within a day (minimum 24 hours).

The obtained product at atmospheric pressure and temperature from 0°C to -80°C can be used for coatings on metal, wood and glass surfaces against cracking, hard substance impact, corrosion, etc.

A positive feature of this remedy is that it prevents or substantially reduces the rate of icing on structures, instruments and other equipment of aerospace equipment, marine vessels floating at sub-zero temperatures. This means also makes it possible to create a new type of lightning-diverter according to Newton's principle (Newton's trap) on airplanes, icebreakers and other technical structures.

The coating has been tested on metal and glass surfaces against icing in the aviation industry when airplanes gain maximum altitude.

Table 1 summarizes examples by composition and chemical and physical-mechanical performance.

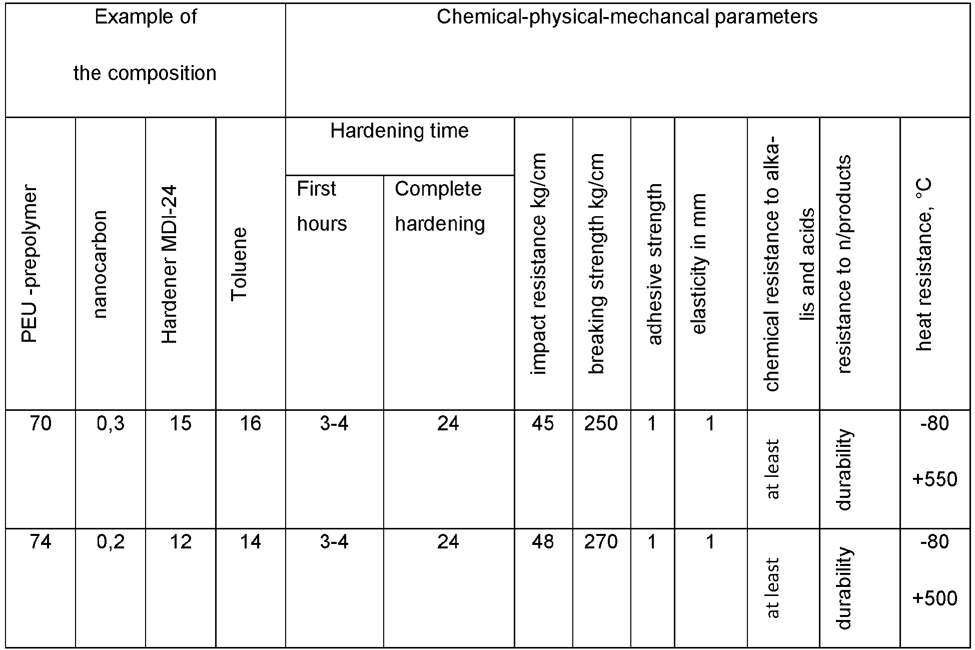

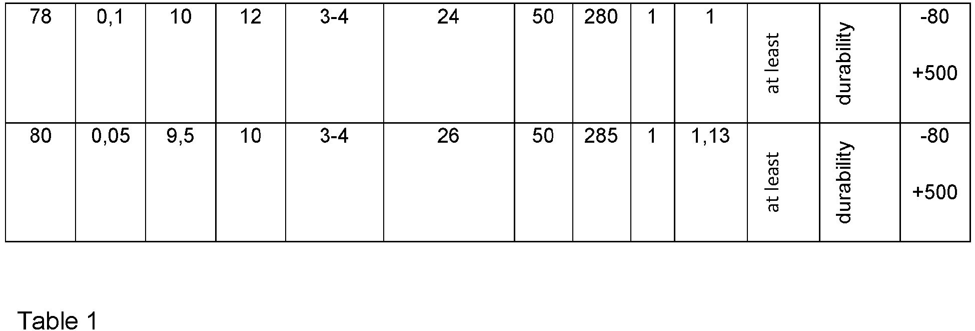

Glass, like any material, is subject to wear and tear.

The wear is caused by corrosion that occurs as the outer surface of the porthole interacts with gases in the atmosphere.

Strangely enough, even exposure of an unprotected porthole to small amounts of moisture will cause gradual deterioration of the textures, visible even to the naked eye under certain lighting conditions.

## Claims

1. A polyester-urethane prepolymer-based protective coating agent comprising
a polyether polyol,
a polyisocyanate containing a polyether-polyether molecular weight M= 1002, combined with styrene at a ratio of polyisocyanate containing polyether polyester of molecular weight M=1002 to styrene of ~1:2,
a MDI-24 curing agent and
a toluene solvent in the following ingredient ratio, wt. %:
polyester urethane prepolymer - 70-80
nanocarbon - 0.1-0.3
the MDI-24 curing agent - 10-12
toluene is the rest.
